# DEMANDE DE BREVET EUROPEEN

(11) **EP 0 765 798 A2**
(43) Date de publication de la demande: **02.04.1997**
(21) Numéro de dépôt: 96114560.4
(22) Date de dépôt: 11.09.1996
(51) Int. Cl.: B62J 29/00

(54) **Rétroviseur réglable pour vélo de course et tous terrains**

(30) Priorité: 28.09.1995 CH 2735/95
(71) Demandeur: Dondo, Carlo, 3960 Sierre (CH)
(72) Inventeur: Dondo, Carlo, 3960 Sierre (CH)
(74) Mandataire: Haft, von Puttkamer, Berngruber, Czybulka

(57) **Abrégé**

Le rétroviseur réglable pour vélo de course et tous terrains comporte un miroir (2) qui est monté sur un support miroir (1). Le support miroir (1) comporte un élément sphérique (3) qui est destiné à être monté dans une cavité sphérique (4) qui est pratiquée dans un bouchon élastique (5), ceci de manière à constituer une rotule. Le bouchon élastique (5) est destiné à être monté dans l'extrémité (6) d'un guidon de vélo. Le diamètre extérieur de la portion du bouchon élastique destinée à être introduite dans le guidon est supérieure par rapport au diamètre intérieur du guidon de manière à ce que l'introduction du bouchon élastique provoque une pression sur la rotule.

## Description

La présente invention se rapporte à un rétroviseur réglable pour vélo de course et tous terrains et plus particulièrement à un rétroviseur qui comporte une rotule qui est constituée par un élément sphérique solidaire d'un support miroir qui est destiné à être monté dans bouchon élastique qui est lui-même destiné à être monté dans la partie intérieur de l'extrémité du guidon du vélo.

Les rétroviseurs pour vélos sont connus depuis des dizaines d'années, mais dans la pratique courante du vélo de course et du vélo tous terrains ils ne sont pas utilisés ceci pour de nombreuses raisons pratiques. La pratique du vélo sans rétroviseur peut provoquer des situations aussi fréquentes que dangereuses. En effet, le cycliste doit se retourner fréquemment pour vérifier si des véhicules ou d'autres cyclistes viennent de l'arrière. Dans pratiquement tous les cas, le fait de se retourner provoque un écart qui peut être très dangereux si un véhicule plus rapide venant de l'arrière se trouve proche du cycliste et en voie de le dépasser par exemple. De plus et en toute évidence, lorsque le cycliste se retourne il ne regarde momentanément pas devant lui ce qui peut provoquer une chute dangereuse si à ce moment là il ne peut pas voir un cailloux ou un trou dans la route par exemple. En course cycliste l'absence de rétroviseur à des conséquences sur la performance puisque le fait de se retourner provoque inévitablement une perte de vitesse, et il est fréquent de voir un coureur échappé se retourner constamment pour voir où se trouvent les poursuivants ce qui favorise le retour de ceux-ci.

Les rétroviseurs conventionnels, c'est-à-dire les rétroviseurs qui sont fixés sur une tige qui est montée sur le guidon, présentent de nombreux inconvénients. En effet ces rétroviseurs conventionnels connus sont très encombrants et ils présentent une importante résistance aérodynamique. Ces rétroviseurs présentent également l'inconvénient de vibrer fortement ce qui rend la vision incertaine. De plus, ils sont très exposés aux chocs, durant les transports, lorsque le vélo se renverse ou lors de chutes, ce qui provoque fréquemment des casses et ce qui nécessite des règlages très fréquents.

Des formes d'exécutions de rétroviseurs montés en prolongement des guidons sont connues, et ces formes d'exécutions permettent d'éliminer une partie des inconvénients des rétroviseurs conventionnels. Toutefois ces formes d'exécutions connues présentent des inconvénients importants. D'une part elles sont de conception assez compliquées et comportent un trop grand nombre d'éléments à assembler ce qui contribue à procurer une prix de revient ne permettant pas d'envisager une commercialisation à grande échelle. D'autre part ces formes d'exécutions de rétroviseurs présentent l'inconvénient, que mis à part le fait qu'ils présentent une certaine marge de mouvement pour les règlages, ils sont montés au guidon d'une manière fixe ce qui en cas de chute violente du cycliste procure un élément sur lequel le cycliste peut se blesser.

Les buts de la présente invention consistent donc à remédier aux inconvénients des formes d'exécutions précitées connues.

Les buts sont atteints selon le principe de l'invention tel que décrit par la revendication 1.

Le rétroviseur réglable pour vélo de course et tous terrains, selon le principe de l'invention, comporte un bouchon réalisé dans une matière plastique élastique et un support de miroir sur lequel est monté un miroir. La conception du rétroviseur est très simple et par conséquent peu coûteuse à réaliser. Le bouchon comporte une cavité en forme de sphère et le support du miroir comporte un élément correspondant qui est destiné à coopérer avec la cavité. Le montage présente l'avantage d'être d'une grande simplicité. Tout d'abord l'élément sphérique du support miroir est monté dans la cavité du bouchon, ce qui est possible en fonction de l'élasticité du bouchon. Ensuite le bouchon avec le support miroir sont montés dans le guidon, et en fonction de dimensions adaptées en conséquence la pression exercée sur le bouchon, lors de son introduction dans le guidon, garantit un maintien élastique du support miroir. En plus de sa très grande simplicité, le principe de l'invention permet de garantir une très grande marge de mouvements, d'une part pour effectuer les réglages et d'autre part pour que le rétroviseur puisse se déplacer en cas de chocs, la pression exercée sur le bouchon et déterminée par la dimension de celui-ci déterminant l'effort nécessaire pour actionner le support miroir. Le rétroviseur présente donc une très large marge de mouvements multidirectionnels ce qui lui permet de s'escamoter dans la plupart des cas de chocs. Au point de vue de la sécurité le principe de l'invention présente une avantage important. En effet, si l'accouplement élastique bouchon-support est prévu pour être résistant à la plupart des chocs, il reste un accouplement élastique et en cas d'une très violente chute du cycliste le support miroir peut sortir complètement du bouchon avant qu'il ne puisse causer de blessures.

Les dessins annexés illustrent schmématiquement et à titre d'exemple les principes de l'invention.

La figure 1 est une vue en coupe de côté de l'ensemble du rétroviseur réglable pour vélo de course.

La figure 2 est une vue en coupe de dessus de l'ensemble du rétroviseur réglable pour vélo de course.

La figure 3 est vue une vue partiellement en coupe de dessus de rétroviseurs réglables montés dans un guidon de vélo de course.

La figure 4 est une vue en coupe de dessus d'une forme d'exécution du rétroviseur pour vélo tous terrains.

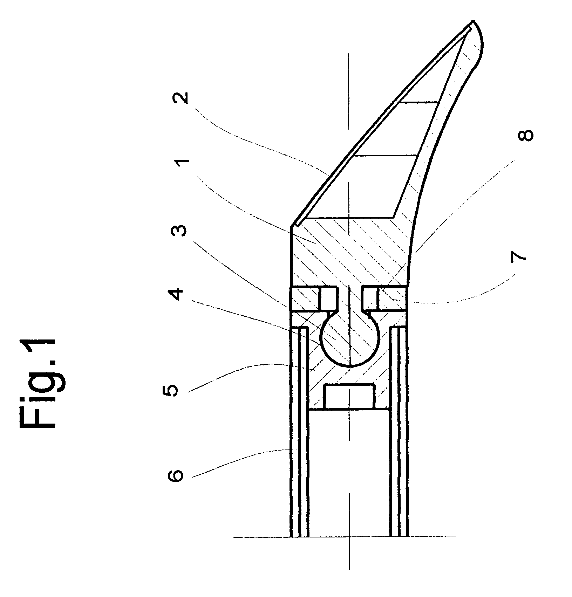

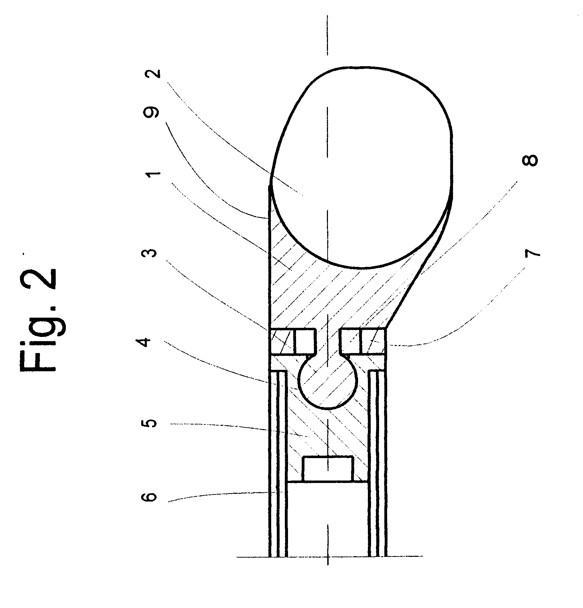

En référence tout d'abord aux figures 1 et 2, un miroir 2 et monté d'une manière fixe sur un support de miroir 1. Le support de miroir 1 comporte une tige dont l'extrémité comporte une portion sphérique 3 qui est destinée à coopérer avec une cavité sphérique 4 qui est pratiquée dans un bouchon 5 de manière à constituer une rotule. Le bouchon 5 comporte une ouverture cylindrique 8 par laquelle la portion sphérique 3 est destinée à être introduite lors du montage. L'ouverture cylindrique 8 est d'un diamètre inférieur par rapport au diamètre de la cavité sphérique 4, ce qui permet de constituer une butée élastique empêchant élastiquement l'élément sphérique de sortir de la cavité sphérique. Le bouchon 5 est destiné à être monté dans la partie intérieure de l'extrémité d'un guidon de vélo de course 6. Un joint 7, réalisé en mousse synthétique par exemple, est monté entre le bouchon et le support miroir. Le bouchon 5 est réalisé en matière plastique élastique ou semi élastique. Le support miroir est réalisé en matière plastique relativement rigide ou tout autre matière, par exemple de l'aluminium. Le diamètre extérieur de la portion du bouchon destinée à être introduite à l'intérieur du guidon et supérieur par rapport au diamètre intérieur du guidon.

Le montage du rétroviseur s effectue tout d'abord en introduisant la portion sphérique 3 dans la cavité 4, ceci avant que le bouchon ne soit monté dans le guidon. Cette opération est facile en fonction de l'élasticité du bouchon. Le bouchon 5 est ensuite introduit dans le guidon 6. En fonction du fait que le diamètre extérieur du bouchon 5 est supérieur au diamètre intérieur du guidon 6, l'introduction du bouchon provoque une pression sur la portion sphérique 3 du support miroir. Cette pression a deux actions essentielles. D'une part elle provoque la friction de la rotule et maintient élastiquement le support miroir en position. D'autre part cette pression garantit le mantien du bouchon dans le guidon. L'ouverture 8 étant d'un plus petit diamètre que la cavité sphérique 4, une butée élastique est ainsi contituée qui empêche, sauf cas extrême, à l'élément sphérique du support miroir de sortir de la cavité. Dans la pratique, la pression exercée est suffisante pour maintenir le support miroir en position et permet d'actionner le support miroir pour régler la position. La marge de mouvements multidirectionnels est importantes dans toutes les directions et selon la longueur de la tige du support miroir, le mouvement possible du support miroir peut être supérieur 45° dans toutes les directions ce qui garantit de bonnes possibilités de résistance aux chocs dans toutes les directions. En fonction de l'élasticité du bouchon et en cas de chocs exceptionnels pouvant provoquer des blessures dues à la présence du rétroviseur, le support miroir peut se désengager complètement du bouchon d'une manière élastique, soit sans détérioration. La forme du support miroir est prévue de manière à ce que le côté extérieur 8 du support se trouve, dans une position normale de réglage, en prolongement du guidon. Cette conception permet de garantir une protection du rétroviseur lors de l'entreposage contre une paroi ou lorsque le vélo tombe sur le sol par exemple. En effet dans la plupart des cas, les chocs contre la paroi ou sur contre le sol agissent sur le guidon.

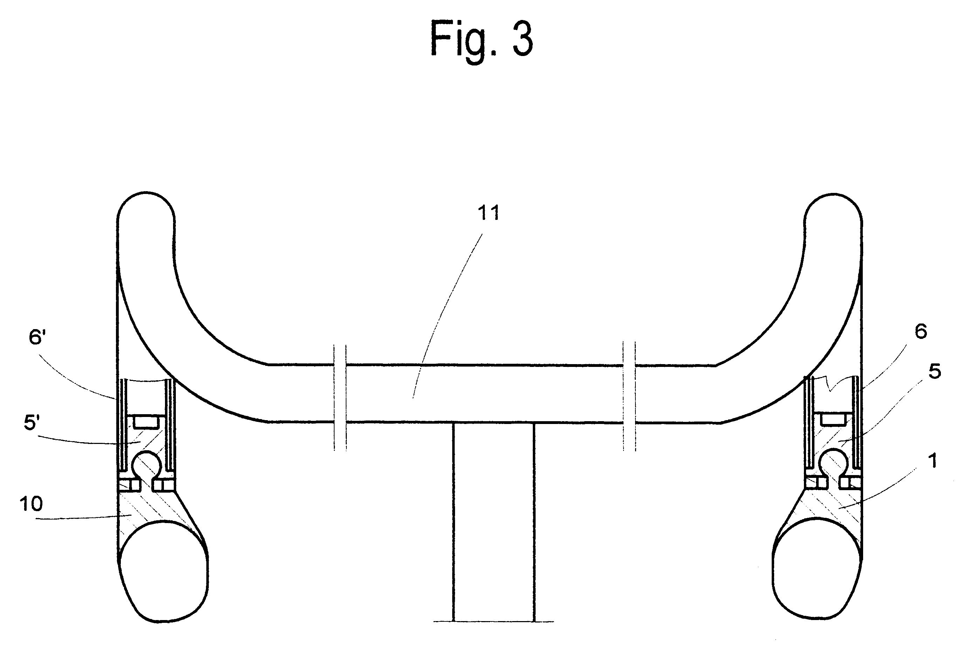

La figure 3 montre une vue d'un guidon 11 de vélo de course comportant un support miroir 1 qui est monté dans un bouchon 5 qui est lui-même monté dans l'extrémité 6 droite du guidon, et comportant un support miroir 10 qui est monté dans un bouchon 5' qui est monté dans l'extrémité 6' gauche du guidon. Les deux support miroir 1 et 10 sont symétriques de manière à ce que les côtés extérieurs des deux supports miroirs gauche et droit se trouvent en plolongement du guidon.

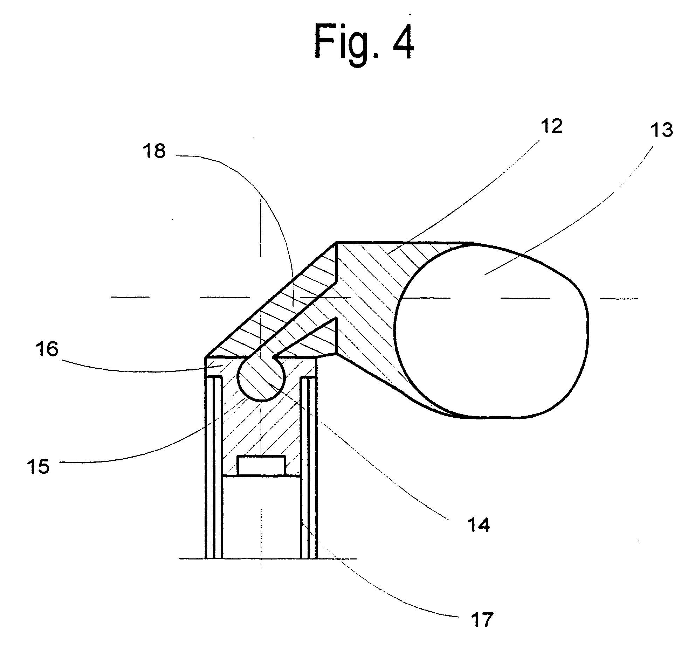

La figure 4 montre un miroir 13 qui est monté sur un support miroir 12, le support miroir comportant une extrémité sphérique 14 qui est montée dans une cavité sphérique 15 correspondante qui est pratiquée dans un bouchon élastique 16 qui est lui-même monté dans l'extrémité 17 d'un guidon de vélo tous terrains. Les guidons de vélos tous terrains sont généralement droits et dans le cas montré par la figure 4, la disposition de la tige du support miroir est conçue de manière à ce que le support miroir soit monté à environ 90° par rapport l'axe du guidon. Un joint 18, qui peut être réalisé en mousse synthétique souple ou en caoutchouc par exemple, est monté entre l'extrémité du guidon et le support miroir.

Le support miroir peut être réalisé en différents matériaux, par exemple en matière plastique injectée ou en aluminium injecté. Le miroir peut être réalisé séparément, en acier inoxydable ou en aluminium par exemple, la face du miroir pouvant être réalisée par un traitement de surface, par chromage par exemple. Selon la matière utilisée pour la réalisation du support miroir, le miroir peut être obtenu par un traitement de surface directement sur le support miroir.

Le bouchon peut être réalisé en différents matériaux, en matière plastique élastique ou semi-élastique ou en caoutchouc par exemple.

## Revendications

1. Rétroviseur réglable pour vélo de course et tous terrains comportant un miroir (2) destiné à être monté sur un support miroir (1) qui comporte un élément sphérique (3) qui est destiné à coopérer avec un élément correspondant qui est destiné à être monté dans l'extrémité d'un guidon de vélo de course, de manière à ce que l'élément sphérique et l'élément correspondant constituent une rotule, caractérisé par le fait que l'élément sphérique (3) du support miroir (1) est monté dans une cavité sphérique (4) qui est pratiquée dans un bouchon élastique (5) qui est destiné à être monté à l'intérieur de l'extrémité (6) d'un guidon de vélo, le diamètre extérieur de la partie du bouchon élastique qui est destinée à être introduite dans le guidon étant supérieur au diamètre intérieur de l'extrémité du guidon de manière à ce que le bouchon élastique exerce une pression sur la rotule et en conséquence une force de friction, pression qui en contre-force permet le maintien du bouchon élastique dans le guidon, et par le fait que le bouchon élastique comporte une ouverture (8) qui est d'un diamètre inférieur par rapport au diamètre de la cavité sphérique (4) de manière à constituer une butée élastique lorsque l'élément sphérique est introduit dans la cavité sphérique, la butée élastique exerçant une pression plus importante et par conséquent un maintien longitudinal plus important lorsque l'ensemble bouchon élastique-support miroir est introduit dans le guidon.

2. Rétroviseur réglable selon la revendication 1, caractérisé par le fait que le côté extérieur du support miroir est conçu de manière à se trouver en prolongement du guidon.

3. Rétroviseur réglable selon la revendication 1, caractérisé par le fait que le bouchon est réalisé en matière plastique élastisque ou semi-élastique.

4. Rétroviseur réglable selon la revendivation 1, caractérisé par le fait que le bouchon est réalisé en caoutchouc.

5. Rétroviseur réglable selon la revendication 1, caractérisé par le fait qu'un joint élastique est monté entre le bouchon et le support miroir.

6. Rétroviseur réglable selon la revendication 1, caractérisé par le fait que, dans le cas de vélo tous terrains comportant un guidon droit, la tige du support miroir comportant l'élément sphérique est disposée selon un angle de manière à ce que le support miroir soit disposé à 90° par rapport à l'axe du guidon.
